# EUROPÄISCHE PATENTANMELDUNG

(11) **EP 0 798 359 A2**
(43) Veröffentlichungstag der Anmeldung: **01.10.1997**
(21) Anmeldenummer: 97104715.4
(22) Anmeldetag: 19.03.1997
(51) Int. Cl.: C09J 175/04, C09J 133/06

(54) **Wässrige Kontaktkleberzubereitung**

(30) Priorität: 19.03.1996 DE 19610797
(71) Anmelder: BASF AKTIENGESELLSCHAFT, 67056 Ludwigshafen (DE)
(72) Erfinder: Seibert, Horst, 67136 Fussgönheim (DE); Licht, Ulrike, 68163 Mannheim (DE); Endisch, Stefan, 64560 Riedstadt (DE); Anselmann, Thomas, 76829 Landau (DE); Fickeisen, Peter, 67246 Dirmstein (DE); Fricke, Hans-Joachim, 67246 Dirmstein (DE); Dragon, Andree, 67346 Speyer (DE); Neumann, Hans J., 67157 Wachenheim (DE); Wüstenfeld, Renate, 67105 Schifferstadt (DE); Wistuba, Eckehardt, 67098 Bad Dürkheim (DE)
(74) Vertreter: Kinzebach, Werner, Dr.

(57) **Zusammenfassung**

Die vorliegende Erfindung betrifft Kontaktkleberzubereitungen in Form einer wäßrigen Dispersion, enthaltend
a) ein Polymer mit einer Glastemperatur im Bereich von -45°C bis 25°C,
b) ein in Wasser dispergierbares Polymerpulver auf Basis wenigstens eines olefinisch ungesättigten Monomers mit einer Glastemperatur im Bereich von -25 bis 90°C und
c) ein Polyurethan mit einer Glastemperatur im Bereich von -50°C bis 10°C.

## Beschreibung

Die vorliegende Erfindung betrifft eine wäßrige Kontaktkleberzubereitung und ein Verfahren zu deren Herstellung.

Kontaktkleber dienen zum Zusammenfügen zweier mit Klebstoff beschichteter vorgetrockneter Substrate, die mittels Druck miteinander verbunden werden. Häufig handelt es sich dabei um lösemittelhaltige Systeme auf Polyurethan- und Polychloroprenbasis, denen gegebenenfalls Harze, Kieselsäuren und weitere Additive zugesetzt werden. Üblicherweise enthalten Kontaktkleber 50 bis 70 % leicht-flüchtiger Lösemittel, wie Ester, Ketone etc. Lösemittelhaltige Kontaktkleber besitzen ein breites Haftungsspektrum auf unterschiedlichen Substraten, wie Holz, Kunststoffe, Textilien etc., eine kurze Abfüllzeit (Zeit zwischen der Applikation des flüssigen Klebstoffs und der Klebung), hohe Anfangsfestigkeiten, gute Wärmestandfestigkeit und gute Stabilität in der flüssigen Form. Ein entscheidender Nachteil besteht darin, daß das Lösemittel verdampft und somit die Umwelt belastet.

Inzwischen sind auch wäßrige Kontaktkleber bekannt, die jedoch, im Vergleich zu den lösemittelhaltigen Kontaktklebern, Nachteile hinsichtlich der Stabilität, der Anfangsfestigkeit und der längeren Ablüftezeit aufweisen. Dagegen besitzen die wäßrigen Kontaktkleber den Vorteil, daß sie ohne organisches Lösungsmittel formuliert werden und somit die Umwelt weniger belasten.

Der vorliegenden Erfindung liegt die Aufgabe zugrunde, eine verbesserte wäßrige Kontaktkleberzubereitung zur Verfügung zu stellen. Insbesondere soll die wäßrige Zubereitung die Vorteile der lösemittelhaltigen Kleber aufweisen.

Überraschenderweise wurde nun gefunden, daß diese Aufgabe durch eine Kontaktkleberzubereitung auf Basis einer Polyacrylatdispersion, eines in Wasser dispergierbaren Polymers und einer Polyurethandispersion gelöst wird.

Gegenstand der vorliegenden Erfindung ist daher eine wäßrige Kontaktkleberzubereitung, enthaltend in wäßriger Dispersion
a) ein Polymer mit einer Glastemperatur im Bereich von -45°C bis 25°C,
b) ein in Wasser dispergierbares Polymerpulver auf Basis mindestens eines olefinisch ungesättigtem Monomers mit einer Glastemperatur im Bereich von -25 bis 90°C und
c) ein Polyurethan mit einer Glastemperatur im Bereich von -50°C bis 10°C.

### Komponente (a)

Das Polymer kommt vorzugsweise in Form einer Dispersion zur Anwendung. Der Feststoffgehalt der Dispersion kann in weitem Bereich variieren, im allgemeinen liegt er im Bereich von 35 bis 75 Gew.-%.

Die Glastemperatur des Polymers liegt vorzugsweise im Bereich von -25°C bis 5°C und insbesondere im Bereich von -15°C bis 5°C.

Bei dem Polymer handelt es sich vorzugsweise um ein radikalisch polymerisiertes Polymer oder Copolymer aus ethylenisch ungesättigten Monomeren. Es kann beispielsweise aufgebaut sein aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, nicht-aromatischen Kohlenwasserstoffen mit mindestens zwei konjugierten Doppelbindungen oder Mischungen dieser Monomeren.

Vorzugsweise handelt es sich um ein Polymer aus C₁-C₂₀-Alkyl(meth)acrylaten oder um ein Copolymer davon mit einem der genannten Monomeren. Besonders bevorzugt ist das Polymer aus 60 bis 100 Gew.-% der genannten Monomere, insbesondere eines C₁-C₂₀-Alkyl(meth)acrylates aufgebaut.

Beispiele für C₁-C₂₀-Alkyl (meth)acrylate sind (meth) Acrylsäurealkylester mit einem C₁-C₁₀-Alkylrest, wie Methylmethacrylat, Methylacrylat, n-Butylacrylat, Ethylacrylat und 2-Ethylhexylacrylat.

Geeignete Vinylester sind beispielsweise Vinyllaurat, Vinylstearat, Vinylpropionat, Versatiksäurevinylester und Vinylacetat.

Geeignete vinylaromatische Verbindungen sind beispielsweise Styrol, Vinyltoluol, α-Methylstyrol, p-Methylstyrol, α-Butylstyrol, 4-n-Butylstyrol etc. Beispiele für Nitrile sind Acrylnitril und Methacrylnitril.

Nichtaromatische Kohlenwasserstoffe sind insbesondere solche mit 2 bis 8 C-Atomen und mindestens zwei olefinischen Doppelbindungen, wie Butadien, Isopren und gegebenenfalls Chloropren.

Die Komponente (a) kann auch weitere Monomere einpolymerisiert enthalten, beispielsweise in einer Menge von 0 bis 40 Gew.-%, vorzugsweise 0 bis 20 Gew.-% und insbesondere 0,2 bis 10 Gew.-%. Brauchbare weitere Monomere sind beispielsweise C₁-C₁₀-Hydroxyalkyl(meth)acrylate, (Meth)acrylamid und dessen am Stickstoff mit C₁-C₄-Alkyl substituierte Derivate, ethylenisch ungesättigte Carbonsäuren, Dicarbonsäuren, deren Halbester und Anhydride, wie (Meth)acrylsäure, Maleinsäure, Fumarsäure, Maleinsäureanhydrid, Maleinsäure- und Fumarsäurehalbester und Itakonsäure.

Die als Komponente (a) bevorzugten Polymerdispersionen sind in der WO-A-95/21884 beschrieben, auf deren Inhalt hiermit in vollem Umfang Bezug genommen wird.

### Komponente (b)

Das Polymer weist vorzugsweise eine Glastemperatur im Bereich von -10°C bis 15°C auf. Es handelt sich insbesondere um ein Polymer aus olefinisch ungesättigten Monomeren, wie vinylaromatischen Monomeren, beispielsweise Styrol, Estern von monoolefinisch ungesättigten C₃-C₅-Carbonsäuren, beispielsweise Acryl- und Methacrylsäureester mit C₁-C₈-Alkanolen oder Vinylester, beispielsweise Vinylacetat, Vinylproprionat, Vinyllaurat und Versatiksäurevinylester. Außerdem sind Polymerisate auf Basis von Diolefinen, wie Butadien, geeignet. Zusätzlich können die Polymerisate Acrylnitril und/oder C₃-C₅-Mono- und/oder -dicarbonsäuren und/oder deren gegebenenfalls am Stickstoffatom substituierten Amide, wie Acrylsäure, Methacrylsäure, Itakonsäure, Acrylsäureamid, Methacrylsäureamid, N-Methylolacrylsäureamid, N-Methylolmethacrylsäureamid etc. einpolymerisiert enthalten. Der Anteil derartiger Monomere kann im Bereich von 0 bis 40 %, insbesondere 10 bis 30 Gew.-% liegen. Ferner können die Polymerisate auch olefinisch ungesättigte Ester von Alkandiolen, wie Ethylenglykolmonoacrylat und/oder -Diacrylat und/oder die entsprechenden Methacrylate einpolymerisiert enthalten. Bevorzugt sind die Polymerisate aufgebaut aus Methacrylsäureestern, Styrol, Vinylestern und/oder Butadien.

Zur Verbesserung der Dispergierbarkeit in Wasser kann das Polymer geeignete Hilfsmittel enthalten, wie ein Copolymerisat aus 20 bis 70 Gew-% Vinylpyrrolidon und 30 bis 80 Gew.-% Vinylacetat, ein wasserlösliches Alkali- und/oder Erdalkalisalz eines Naphthalinsulfonsäure-Formaldehyd-Kondensationsproduktes, Stärke, Gelatine, Cellulosederivate und/oder anorganische Abstandshalter. Die Menge an Hilfsmittel liegt im allgemeinen im Bereich von 0,5 bis 30 Gew.-%, insbesondere 1 bis 10 Gew.-%.

Die als Komponente (b) bevorzugten Polymere sind in der EP-A-78 449 beschrieben, auf deren Inhalt hiermit in vollem Umfang Bezug genommen wird.

### Komponente (c)

Das Polyurethan besitzt vorzugsweise eine Glastemperatur im Bereich von -46°C bis -5°C. Es kommt insbesondere als Dispersion mit einem Feststoffgehalt von 30 bis 60 Gew.-% zur Anwendung.

Vorzugsweise handelt es sich bei der Polyurethandispersion um eine emulgatorfreie, wäßrige Dispersion, die erhältlich ist durch Umsetzung von (a) Dihydroxylverbindungen mit einem Molekulargewicht von 500 bis 5 000, (b) Diisocyanaten und (c) Kettenverlängerungsmitteln mit mindestens zwei gegenüber Isocyanatgruppen reaktionsfähigen Wasserstoffatomen und einem Molekulargewicht unter 300 zu einem Präpolymeren mit endständigen Isocyanatgruppen, anschließende Umsetzung des Präpolymeren mit (d) gegebenenfalls in Wasser gelösten Salzen von aliphatischen Aminocarbonsäuren oder Aminosulfonsäuren bzw. Amino- oder Hydroxylgruppen enthaltenden tertiären Ammoniumsalzen und Dispergieren des erhaltenen Polyurethans in Wasser. Vor Dispergieren des Polyurethans mischt man ein in einem Lösungsmittel gelöstes, organisches Kondensations-Harz zu, bei dem es sich vorzugsweise um ein Phenol-Formaldehyd-Kondensat handelt.

Die als Komponente (c) bevorzugten Polyurethane sind in der EP-A-382 052 beschrieben, auf deren Inhalt hiermit in vollem Umfang Bezug genommen wird.

### Weitere Bestandteile

Die erfindungsgemäße Kontaktkleberzubereitung kann gegebenenfalls weitere Bestandteile enthalten. So kann sie anorganische Stoffe mit einer mittleren Teilchengröße im Bereich von 5 µm bis 100 µm enthalten. Geeignete anorganische Stoffe sind beispielsweise Kieselsäuren.

Weiter kann die Zubereitung Weichharze enthalten, wie Kohlenwasserstoffharze, Abietinsäureester und/oder Alkydharze.

Schließlich kann die Kontaktkleberzubereitung übliche Formulierungsbestandteile enthalten, wie Netz- und Dispergiermittel (Pigmentverteiler), anionische und/oder nicht-ionische Emulgatoren, Mittel zur Einstellung des pH-Wertes, beispielsweise Basen, wie Natronlauge, Ammoniak, Triethylamin und Hydroxylamine, und Verdickungsmittel, wie Polyacrylate, Stärke- und Cellulosederivate sowie Entschäumer, beispielsweise auf Siliconbasis.

Vorzugsweise enthält die erfindungsgemäße Kontaktkleberzubereitung 20 bis 70 Gew.-% der Komponente (a), 10 bis 50 Gew.-% der Komponente (b), 20 bis 80 Gew.-% der Komponente (c), 0 bis 30 Gew.-% der anorganischen Stoffe, 0 bis 20 Gew.-% Weichharze und 0 bis 10 Gew.-% Formulierungsbestandteile.

Die Herstellung der erfindungsgemäßen Zubereitungen erfolgt durch Vermischen der zur Anwendung kommenden Komponenten in nachfolgender Reihenfolge:
1. Die Komponente (a) wird in Form einer Dispersion vorgelegt;
2. gegebenenfalls Zugabe eines Netzmittels und/oder Dispergiermittels;
3. Dispergierung der Komponente (b) in dem erhaltenen Gemisch, vorzugsweise unter Rühren;
4. gegebenenfalls Zugabe der Weichharzkomponente, insbesondere unter Rühren;
5. Zugabe der Komponente (c); und
6. gegebenenfalls Zugabe weiterer Formulierungsbestandteile, insbesondere eines Verdickers.

Wenn ein Entschäumer zur Anwendung kommt, kann dieser bereits zu Beginn der Polymerdispersion zugesetzt werden, er kann aber auch portionsweise, je nach Schaumentwicklung, zugegeben werden.

Die erfindungsgemäßen Kontaktkleberzubereitungen sind lösemittelfrei und in der Lage, zwei unter Spannung stehende Schaumkörper sofort zu fixieren (Kontaktklebeeigenschaft) . Weiter sind sie chlorfrei, so daß keine Chlorwasserstoffabspaltung und keine Korrosion von Metallteilen, wie Federkernen, erfolgen kann. Außerdem können keine organischen Chlorverbindungen ins Abwasser gelangen.

Weiter besitzen die erfindungsgemäßen Kontaktkleberzubereitungen einen hohen Feststoffgehalt und trotzdem niedrige Viskosität. Sie sind daher stabil und besonders für die Spritzapplikation geeignet, wie sie bei der Schaumverklebung üblich ist.

Darüber hinaus wird durch den hohen Feststoffgehalt der Zubereitungen ein schnelles Auftrocknen erzielt. Dadurch erreicht man Anfangsfestigkeitswerte, welche denjenigen von lösemittelhaltigen Kleberzubereitungen entsprechen.

Die nachfolgenden Beispiele erläutern die Erfindung, ohne sie zu begrenzen.

Die in den Beispielen angegebenen Bestandteile werden unter Rühren in der vorgegebenen Reihenfolge vermischt.

### Beispiel 1

Die im Rezept angegebenen Bestandteile werden unter Rühren in der folgenden Reihenfolge zugegeben:
- 24,0 Teile: Polacrylatdispersion mit Feststoffgehalt 57 %, Glastemp. -5°C (Acronal ® S 400)
- 0,4 Teile: niedermolekulare Polyacrylsäure Ammoniumsalz (30 %ig)
- 0,1 Teile: Siliconentschäumer (20 %ig)
- 13,5 Teile: Polyacrylatpulver (Glastemp. -6°C) (gemäß Beispiel 4 der EP-A-78449)
- 16,0 Teile: Diethylenglykol modifiziertes Kolophoniumharz (Dertoline ® 25)
- 45,0 Teile: Polyurethandispersion (50 %ig, wie in Beispiel 2 der EP-A-382052 beschrieben)
- 1,0 Teile: Natriumpolyacrylatverdickerlösung (8 %ig)

Die Prüfergebnisse sind in der Tab. 1 zusammengestellt.

### Beispiel 2

- 24,0 Teile: Polyacrylatdispersion (70 %ig Tg -42°C Acronal DS® 3468)
- 0,4 Teile: niedermolekulare Polyacrylsäure Ammoniumsalz (30 %ig)
- 0,1 Teile: Siliconentschäumer (20 %ig)
- 13,5 Teile: Polyacrylatpulver (Tg -6°C) (gemäß Beispiel 4 der EP-A-78449)
- 10,0 Teile: mit Diethylenglykol modifiziertes Kolophoniumharz (Dertoline ® 25)
- 51,0 Teile: Polyurethandispersion (50 %ig, wie in Beispiel 2 der EP 382052 beschrieben)
- 1,0 T: Natrium-Polyacrylatverdicker (8 %ig)

Die Prüfergebnisse sind in Tab. 1 zusammengestellt.

Die Kontaktklebezeit wurde wie folgt bestimmt:
Als Substrat wurde ein Polyetherschaum mit einer Rohdichte von 35 kg/m³, einer Stauchhärte von 38 kPa und einer Eindrückhärte von 18 verwendet. Die Verklebungsfläche war 50 x 50 mm. Der Auftrag erfolgte mit einer Spritzpistole, Düsendurchmesser 1,8 mm, Ausgangsdruck Kleber 2 bar. Die Auftragsmenge war 50 g/m² naß. Kontaktklebezeit:
0 - 0,5 - 1 - 2 - 3 - 4 - 5 - 10 - 15 - 20 - 25 Minuten.

Die Verklebung erfolgte durch Spannungsverklebung des mittig gefalteten und durch ein Rollenpaar gezogenen Prüfkörpers.

Die Wärmestandfestigkeit wurde wie folgt bestimmt:
Der Kleber wird auf Schaumstoffquader aufgespritzt. Nach einer definierten Ablüftezeit wird die beschichtete Seite des Schaumstoffquaders so um einen dünnen Stahlstab gebogen, daß die mit Kleber beschichteten Hälften miteinander verkleben. Der erhaltene Körper wird dann einer Wärmebelastung in einem Umlufttrockenschrank unterzogen, wobei ausgehend von 50°C ein Temperaturanstieg um 20°C/h vorgenommen wird. Die Wärmestandfestigkeit wird als die Temperatur angegeben, bei der sich unter der Wärmebelastung die Verklebung löst.

**Tabelle 1**

| Prüfergebnisse | | | |
|---|---|---|---|
| | Viskosität mPas (250 s⁻¹) | Kontaktklebezeit (Minuten) | Wärmestandfestigkeit (°C) |
| Beispiel 1 | 360 | 0 - 25 | 58 |
| Beispiel 2 | 420 | 0 - 20 | 54 |

## Patentansprüche

1. Kontaktkleberzubereitung in Form einer wäßrigen Dispersion, enthaltend
a) ein Polymer mit einer Glastemperatur im Bereich von -45°C bis 25°C,
b) ein in Wasser dispergierbares Polymerpulver auf Basis wenigstens eines olefinisch ungesättigten Monomers mit einer Glastemperatur im Bereich von -25 bis 90°C und
c) ein Polyurethan mit einer Glastemperatur im Bereich von -50°C bis 10°C.

2. Kontaktkleberzubereitung nach Anspruch 1, wobei das Polymer (a) zu 60 bis 100 Gew.-% aus C₁-C₂₀-Alkyl(meth)acrylaten besteht.

3. Kontaktkleberzubereitung nach Anspruch 2, wobei das Polymer (a) ein Copolymer aus wenigstens einem C₁-C₂₀-Alkyl(meth)acrylat und wenigstens einem Monomer ist, das ausgewählt ist unter Styrol, Butadien, Acrylnitril und einem C₁-C₁₂-Vinylester.

4. Kontaktkleberzubereitung nach einem der Ansprüche 1 bis 3, wobei das Polymerpulver (b) aufgebaut ist aus wenigstens einem Monomer, das ausgewählt ist unter vinylaromatischen Monomeren, Estern von monoolefinisch ungesättigten C₃-C₅-Carbonsäuren, Vinylestern und Diolefinen.

5. Kontaktkleberzubereitung nach einem der vorhergehenden Ansprüche, wobei die Komponente (c) ein Polyurethan ist, das erhältlich ist durch Umsetzung von (a) Dihydroxylverbindungen mit einem Molekulargewicht von 500 bis 5 000, (b) Diisocyanaten, (c) Kettenverlängerungsmitteln mit mindestens zwei gegenüber Isocyanatgruppen reaktionsfähigen Wasserstoffatomen und einem Molekulargewicht unter 300 und (d) Salzen von aliphatischen Aminocarbonsäuren oder Aminosulfonsäuren bzw. Amino- oder Hydroxylgruppen enthaltenden tertiären Ammoniumsalzen.

6. Kontaktkleberzubereitung nach einem der vorhergehenden Ansprüche, die 20 bis 70 Gew.-% der Komponente (a), 10 bis 50 Gew.-% der Komponente (b) und 20 bis 80 Gew.-% der Komponente (c) enthält.

7. Kontaktkleberzubereitung nach einem der vorhergehenden Ansprüche, die zusätzlich feinteilige anorganische Stoffe mit einer mittleren Teilchengröße im Bereich von 5 bis 100 µm enthält.

8. Kontaktkleberzubereitung nach einem der vorhergehenden Ansprüche, die zusätzlich mindestens ein Weichharz enthält.

9. Verfahren zur Herstellung der Kontaktkleberzubereitung nach einem der Ansprüche 1 bis 8, dadurch gekennzeichnet, daß man das Polymer (a) in Form einer Dispersion vorlegt, gegebenenfalls ein Netz- oder Dispergiermittel zugibt, die Komponente (b) in der Dispersion bzw. dem erhaltenen Gemisch dispergiert, gegebenenfalls ein Weichharz zugibt, die Komponente (c) in Form einer Dispersion zugibt; und gegebenenfalls weitere Formulierungsbestandteile zugibt.
